# EUROPEAN PATENT APPLICATION

(11) **EP 4 575 889 A1**
(43) Date of publication of application: **25.06.2025**
(21) Application number: 24221318.9
(22) Date of filing: 18.12.2024
(51) Int. Cl.: G06K 15/02, B41J 11/00, B41J 3/407

(54) **PRINTING DEVICE AND METHOD FOR CONTROLLING PRINTING DEVICE**

(30) Priority: 22.12.2023 JP 2023216596
(71) Applicant: Seiko Epson Corporation, Tokyo 160-8801 (JP)
(72) Inventor: TAKISHIMA, Keigo, Suwa-shi, Nagano 392-8502 (JP)
(74) Representative: MERH-IP Matias Erny Reichl Hoffmann Patentanwälte PartG mbB

(57) **Abstract**

A printing device includes a transport section that transports a medium having a pattern; an imaging section that captures an image of the medium; a printing section that performs printing on the medium; and a control section that performs a print process after performing a pre-print process, wherein the control section, as the pre-print process, acquires pattern data that relates to the pattern of the medium and expands print data that is to be printed by the printing section to generate expansion data and, as the print process, acquires captured pattern data that relates to the pattern of the medium captured by the imaging section, generates, based on the captured pattern data, conversion data based on the expansion data, and prints the conversion data on the medium using the printing section.

## Description

The present application is based on, and claims priority from JP Application Serial Number 2023-216596, filed December 22, 2023, the disclosure of which is hereby incorporated by reference herein in its entirety.

### BACKGROUND

### 1. Technical Field

The present disclosure relates to a printing device and a method for controlling the printing device.

### 2. Related Art

In the related art, as disclosed in JP-A-2023-63795, a device is known that acquires surface information about a surface of a medium using an imaging device to adjust an amount of ink, and then prints on the medium.

If the medium has a pattern, the medium may deform as it is transported, for example by stretching, and the pattern may also deform. In the device described in JP-A-2023-63795, there was concern that the printing would be shifted with respect to the deformed pattern.

### SUMMARY

A printing device includes a transport section that transports a medium having a pattern; an imaging section that captures an image of the medium; a printing section that performs printing on the medium; and a control section that performs a print process after performing a pre-print process, wherein the control section, as the pre-print process, acquires pattern data that relates to the pattern of the medium and expands print data that is to be printed by the printing section to generate expansion data and, as the print process, acquires captured pattern data that relates to the pattern of the medium captured by the imaging section, generates, based on the captured pattern data, conversion data based on the expansion data, and prints the conversion data on the medium using the printing section.

A method for controlling a printing device that includes a transport section that transports a medium having a pattern, an imaging section that captures an image of the medium, and a printing section that performs printing on the medium, and performs a print process after performing a pre-print process, the method for controlling the printing device includes, as the pre-print process, acquiring pattern data that relates to the pattern of the medium and expanding print data that is to be printed by the printing section to generate expansion data, and, as the print process, acquiring captured pattern data that relates to the pattern of the medium captured by the imaging section, generating, based on the captured pattern data, conversion data based on the expansion data, and printing the conversion data on the medium using the printing section.

### BRIEF DESCRIPTION OF THE DRAWINGS

FIG. 1 is a block diagram showing a configuration of a printing device.
FIG. 2 is a schematic diagram of the printing device as viewed from above.
FIG. 3 is a schematic diagram of the printing device as viewed from the front.
FIG. 4 is a flowchart showing a pre-print process.
FIG. 5 is a conceptual diagram of a medium when acquired pattern data were reflected on the medium.
Fig. 6 is a conceptual diagram of the medium when print data including first print data, second print data, and third print data is reflected on the medium.
FIG. 7 is a conceptual diagram of the medium when the third print data that is outside a pattern is separated from the print data shown in FIG. 6.
FIG. 8 is a conceptual diagram of the medium showing third expansion data that was obtained by expanding the third print data shown in FIG. 7.
FIG. 9 is a conceptual diagram of the medium when the first print data and the second print data within the pattern are separated from the print data shown in FIG. 6.
FIG. 10 is a conceptual diagram of the medium showing first expansion data obtained by expanding the first print data shown in FIG. 6 and second reduction data obtained by contracting the second print data in accordance with the first expansion data.
FIG. 11 is a conceptual diagram of the medium when the second reduction data shown in FIG. 10 is replaced with the second print data.
FIG. 12 is a flowchart showing a process when printing.
FIG. 13 is a conceptual diagram of the medium when a captured pattern is reflected on the medium.
Fig. 14 is a conceptual diagram of the medium before removing third elimination data, which is a portion that overlaps with the captured pattern, from third expansion conversion data, which is obtained by converting the third expansion data.
FIG. 15 is a conceptual diagram of the medium showing third conversion data that is outside the captured pattern after the third elimination data is removed from the third expansion conversion data in FIG. 14.
FIG. 16 is a conceptual diagram of the medium showing the state before first elimination data protruding from the captured pattern data PS is removed from first expansion conversion data obtained by converting the first expansion data.
FIG. 17 is a conceptual diagram of the medium showing first conversion data in the captured pattern after removing the first elimination data from the first expansion conversion data in FIG. 16, and second conversion data in the captured pattern obtained by converting the second print data.
FIG. 18 is a conceptual diagram of the medium showing conversion data obtained by combining the first conversion data and the second conversion data that are inside the captured pattern and the third conversion data that are outside the captured pattern.

### DESCRIPTION OF EMBODIMENTS

Hereinafter, embodiments will be described with reference to the drawings. Note that the directions in the drawings will be described using a three-dimensional coordinate system. For convenience of explanation, the positive direction of a Z-axis is referred to as an upward direction, upward, or simply up, the negative direction is referred to as a downward direction, downward, or simply down, the positive direction of an X-axis is referred to as a right direction, right side, or simply right, the negative direction is referred to as a left direction, left side, or simply left, the positive direction of a Y-axis is referred to as a rear direction, rear side, or simply rear, and the negative direction is referred to as a front direction, front side, or simply front.

### 1. Configuration of printing device

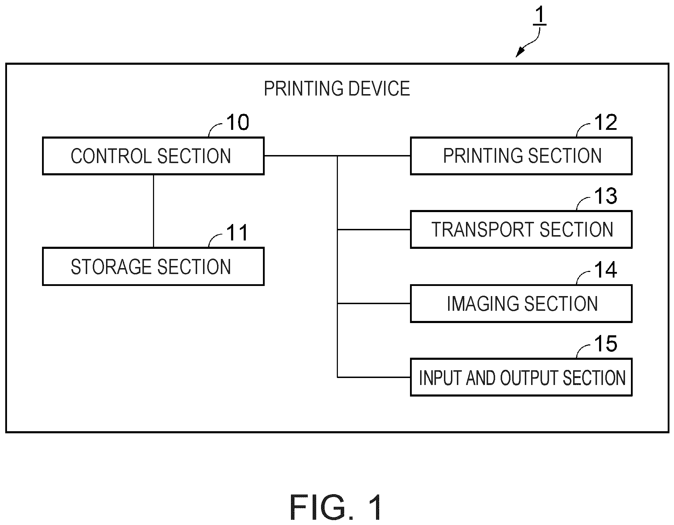

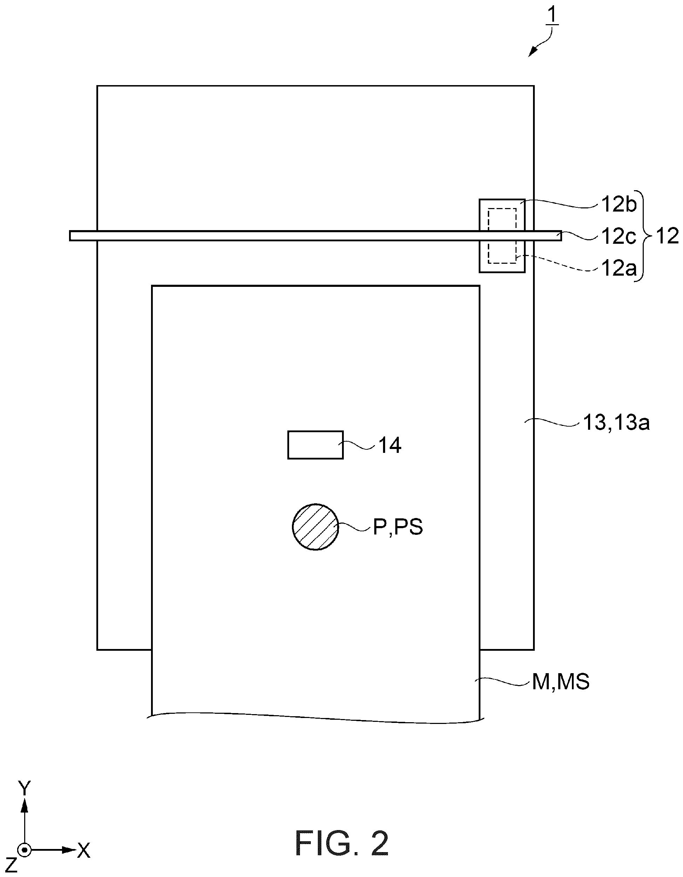

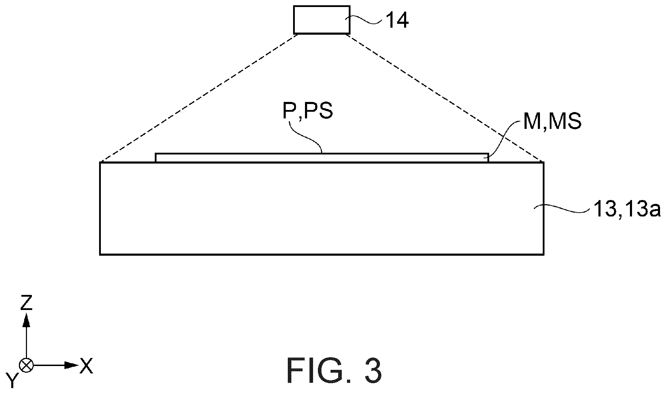

As shown in FIG. 1, a printing device 1 includes a control section 10, a storage section 11, a printing section 12, a transport section 13, an imaging section 14, and an input and output section 15. With reference also to FIGS. 2 and 3, a configuration of the printing device 1 will be described.

The control section 10 includes a central processing unit (CPU) that integrally controls the respective sections of the printing device 1, a universal asynchronous receiver transmitter (UART) that manages input and output, a field programmable gate array (FPGA) that is a logic circuit, a programmable logic device (PLD), and the like. The CPU is also referred to as a processor. The storage section 11 includes a flash read only memory (ROM) or a hard disk drive (HDD) which is a rewritable non-volatile memory, a random access memory (RAM) which is a volatile memory, and the like. The CPU of the control section 10 reads a program such as firmware stored in the nonvolatile memory of storage section 11 and executes the program using the RAM of storage section 11 as a working area. The control section 10 and the storage section 11 are mounted on a circuit substrate (not shown).

A medium M shown in FIGS. 2 and 3 is, for example, a long cloth made of natural fibers or synthetic fibers. The long cloth is also called a roll of cloth. The printing device 1 performs printing on the medium M. "Printing on cloth" is also referred to as textile printing, and the medium M is also referred to as textile to be printed on. Note that the medium M may be any of plain paper, synthetic paper, film, and the like.

As shown in FIG. 2, the medium M has a pattern P. In FIG. 2, one pattern P is shown on the medium M for the sake of convenience, but a plurality of patterns P may be arranged at predetermined positions. As the medium M having the pattern P, for example, there is a yarn-dyed fabric, in which fibers or yarns that were dyed at the stage of a fiber or a yarn is woven to form pattern P, and a Jacquard textile, in which fibers or yarns are woven to create a pattern of irregularities. Note that the pattern P may be pre-printed on the medium M. In FIG. 2, captured medium data MS and captured pattern data PS (to be described later), obtained by capturing the medium M and the pattern P by the imaging section 14, are also shown in an imaginary manner corresponding to the medium M and the pattern P.

As shown in FIG. 2, the transport section 13 includes an endless transport belt 13a. The transport section 13 circulates the transport belt 13a by a transport motor and a roller (both of which are not shown), and transports the medium M in the rear direction, which is a transport direction. Note that in the following description, an upstream and downstream in the transport direction by the transport section 13 are also simply referred to as an upstream and downstream.

The printing section 12 includes an inkjet type head 12a having a plurality of nozzles, a carriage 12b, and a guide shaft 12c. The head 12a is located above the transport belt 13a and facing the transport belt 13a. The printing device 1 can be attached with ink tanks or ink cartridges that store ink of each color, such as cyan, magenta, yellow, and black (CMYK). The printing section 12 includes a supplying mechanism (not shown) that supplies ink from an ink tank or the like to the head 12a. The supply mechanism supplies ink of each color from the ink tank or the like to corresponding nozzles of the head 12a.

The carriage 12b includes a carriage motor (not shown). The head 12a is mounted on the carriage 12b. Head 12a can move reciprocally to the left and right directions above the medium M, which is placed on the transport belt 13a, together with carriage 12b by the carriage motor. The head 12a ejects ink droplets from the nozzles onto the medium M while moving above the medium M under control based on print data by the control section 10, and performs printing. The print data is stored in the storage section 11. The print data may be acquired from an external device such as a computer that is connectable to the printing device 1.

Note that the ink colors may be any combination of four or more colors including dark and light colors of CMYK, for example. The head 12a may include nozzles that eject penetration liquid onto the medium M. The penetration liquid is liquid that promotes a penetration of ink droplets that have adhered to the front surface of medium M to the back surface.

The imaging section 14 is configured with a camera that has a solid-state imaging element, such as a charge coupled device (CCD) image sensor. Further, the imaging section 14 may be equipped with a lighting device. The imaging section 14 is located at a position above the transport belt 13a and facing the transport belt 13a. The imaging section 14 can capture an image of the medium M placed on the transport belt 13a. As shown in FIG. 3, the imaging section 14 can capture at least an entire width of the right and left sides of the medium M. As shown in FIG. 2, the imaging section 14 is located upstream of the printing section 12. The imaging section 14 can capture the pattern P of the medium M before being printed by the printing section 12.

The input and output section 15 is, for example, a touch panel display. The input and output section 15 has a display panel, which is an output section that displays various information, and a detection panel, which is an input section. The detection panel is superimposed on the display panel. The detection panel can detect an operation of user's finger or the like using a method such as a capacitive type, a resistive film type, or an optical type. Note that in the input and output section 15, the input section may be a keyboard, a mouse, a button, or the like, and the output section may be a stand type liquid crystal display or the like.

### 2. Method for controlling printing device that performs pre-print process

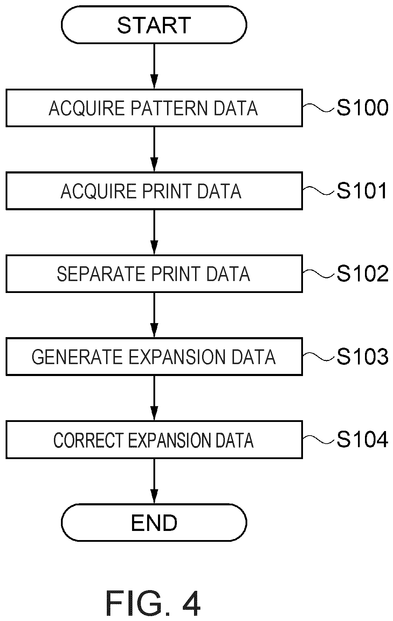

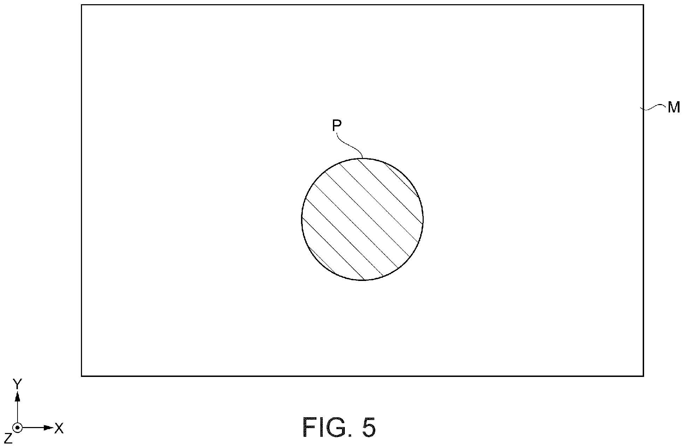

As shown in FIG. 4, the control section 10 of the printing device 1 performs a predetermined process on print data D0 before the printing section 12 attempts to print the print data D0. With reference also to FIGS. 5 to 11, a control of pre-print process executed by the control section 10 will be described.

Note that FIGS. 5 to 11 show conceptual diagrams the medium M on which data, such as pattern data P, the print data D0, and data in a process of processing the print data D0 (to be described later), is reflected. The control section 10 can write and read each set of data to and from the memory address of the storage section 11 so as to correspond to the conceptual diagrams of FIGS. 5 to 11. Note that in the following description, it is omitted that the control section 10 writes and reads each set of the data from the storage section 11.

As shown in FIG. 4, the control section 10 acquires the pattern data P (S100). The pattern data P is information relating to the pattern P of the medium M. The pattern data P is, for example, CAD data including information indicating a position and a shape of the pattern P in the medium M. The pattern data P shown in FIG. 5 is data corresponding to the pattern P of the medium M shown in FIG. 2, and is denoted by the same reference numerals for convenience of explaining in correspondence with the pattern P of the medium M.

The control section 10 can acquire the pattern data P as CAD data from another device such as a loom that forms the pattern P by weaving the medium M. The acquired pattern data P is stored in the storage section 11. The pattern data P may be stored in advance in the storage section 11. The control section 10 can acquire the pattern data P from the storage section 11.

The control section 10 performs a binarization process on the acquired pattern data P, and sets a first feature point related to an edge of the pattern data P that was subjected to the binarization process. At this time, the control section 10 may perform a smoothing process on the pattern data P that was subjected to the binarization processing. The control section 10 can display the pattern data P that was subjected to the binarization process by the input and output section 15, and can set the first feature point by detecting the operation of the user. The storage section 11 may store an algorithm for setting the first feature point. The control section 10 can read the algorithm from the storage section 11 and execute it, and can set the first feature point. The control section 10 may set the first feature point by an external device.

The control section 10 or the user extracts a characteristic point from the pattern data P that was subjected to the binarization process and sets the first feature point. For example, the control section 10 or the user may extract a corner of an edge from the pattern data P that was subjected to the binarization process and may set the extracted corner as the first feature point. The set first feature point is used when the control section 10 performs a print process (to be described later).

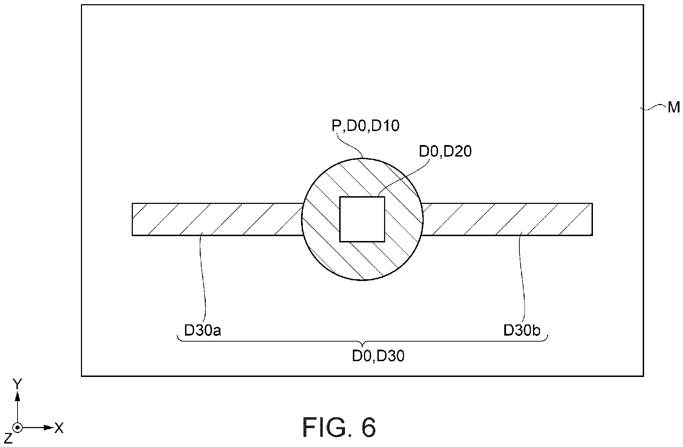

The control section 10 acquires the print data D0 that is to be printed by the printing section 12 (S101). As shown in FIG. 6, the print data D0 includes, for example, information indicating a position, a shape, and a print color on the medium M. The control section 10 may acquire the print data D0 from an external device or from the storage section 11 stored in advance.

In the example of FIG. 6, the print data D0 has first print data D10 that is located within the pattern data P. The print data D0 also has second print data D20, which is blank data located within the pattern data P and within the first print data D10. In FIG. 6, the print data D0 is superimposed on the pattern data P shown in FIG. 5. As shown in FIG. 6, the outer periphery of the pattern data P and the outer periphery of the first print data D10 have the same position and shape. Further, the print data D0 has third print data D30 that is located outside the pattern data P. The third print data D30 includes third A print data D30a that is located on the left and third B print data D30b that is located on the right.

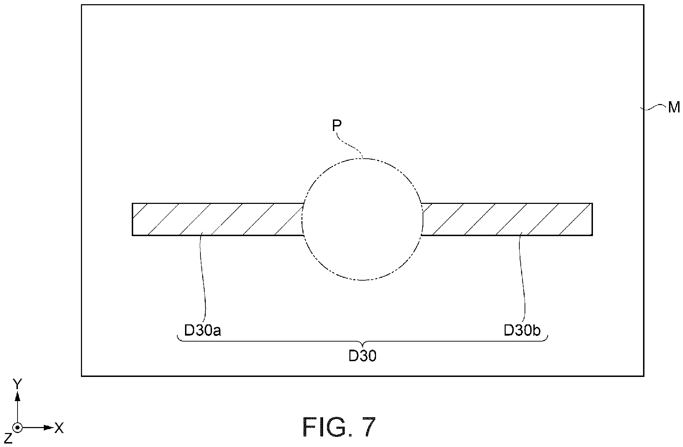

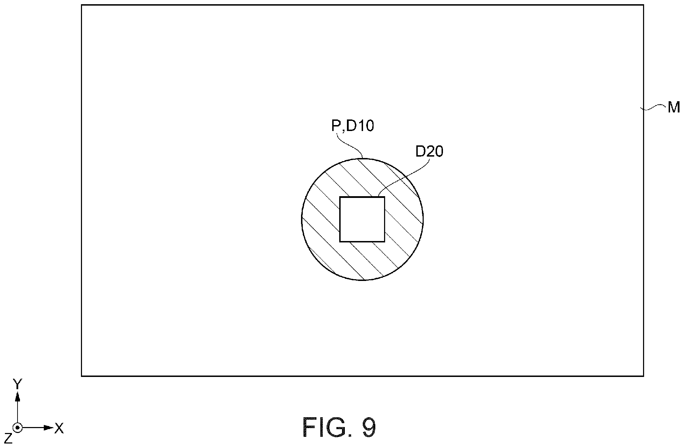

The control section 10 separates the print data D0 (S102). Specifically, the control section 10 separates the third print data D30 that is outside the pattern data P from the print data D0 as shown in FIG. 7. The third print data D30 is located outside the pattern data P and does not overlap with the pattern data P. The control section 10 also separates the first print data D10 within the pattern data P from the print data D0 as shown in FIG. 9. The first print data D10 is located within the pattern data P and overlaps with the pattern data P. If the print data D0 has second print data D20, which is located within the first print data D10, the control section 10 separates the second print data D20 together with the first print data D10. In this case, the second print data D20 is also located within the pattern data P and overlaps with the pattern data P.

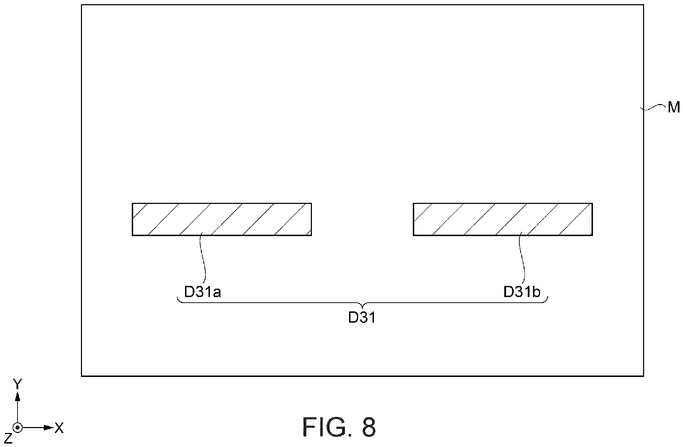

The control section 10 expands the print data D0 to generate each set of expansion data (S103). Here, "expansion" means that the control section 10 increases a region of the print data D0 in the front and rear directions and in the right and left directions. Specifically, as shown in FIG. 8, the control section 10 expands a region of the separated third print data D30, which is outside the pattern data P, to generate third expansion data D31. The third expansion data D31 includes third A expansion data D31a where the third A print data D30a was expanded and third B expansion data D31b where the third B print data D30b was expanded.

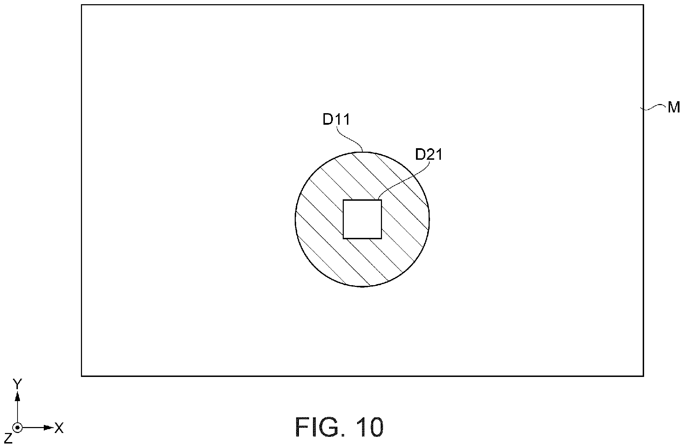

The control section 10 also expands a region of the first print data D10, which is within the separated pattern data, to generate first expansion data D11 as shown in FIG. 10. The control section 10 corrects the first expansion data D11 (S104). In other words, the control section 10 corrects the first expansion data D11 in the following manner according to a predetermined provision.

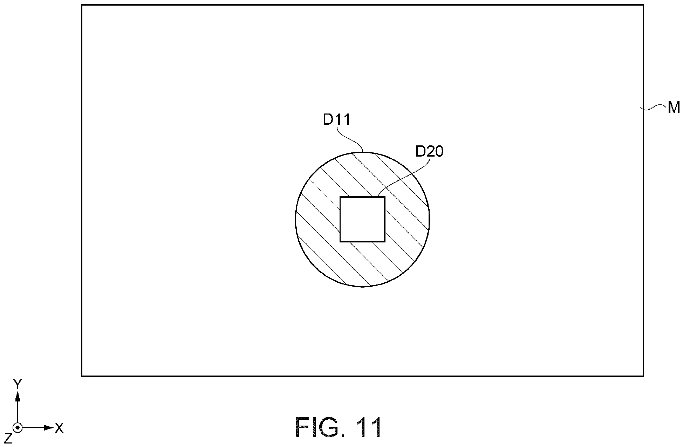

As shown in FIG. 10, when the control section 10 expands the first print data D10 to generate the first expansion data D11, the second print data D20 in the pattern data P becomes smaller and contracts to become second reduction data D21. Therefore, as shown in FIG. 11, the control section 10 corrects the contracted second reduction data D21 so as to replace it with the original second print data D20. In this way, when generating the first expansion data D11, the control section 10 corrects the second print data D20 so that it will be located within the first expansion data D11.

Hereinafter, the third expansion data D31, the first expansion data D11, and the replaced second print data D20 are collectively referred to as expansion data. The control section 10 can convert the generated expansion data so that it covers a deformed pattern P (to be described later). The control section 10 may, based on the expansion data, use the input and output section 15 to emphasize and display the expanded portion of the original print data D0.

### 3. Method for controlling a printing device that performs print process

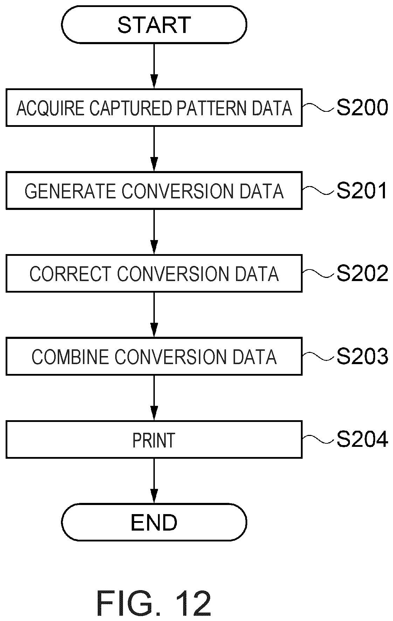

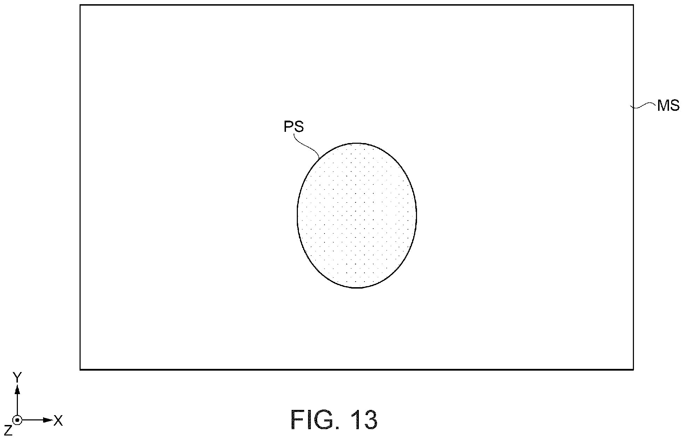

As shown in FIG. 12, the control section 10 of the printing device 1 performs a print process after the above pre-print process. With reference to FIGS. 13 to 18, a control of the print process performed by the control section 10 will be described. The control section 10 can start the print process based on the user's operation of the input and output section 15. The control section 10 can perform the above pre-print process in advance using the time until the user operates the input and output section 15.

Note that similar to the above pre-print process, FIGS. 13 to 18 show conceptual diagrams of the medium M when data in a process of being processed by the control section 10 is reflected on the captured medium data MS, which is a captured image of the medium M. Similar to the pre-print process above, the control section 10 can write and read each set of data to and from the memory address of the storage section 11 so as to correspond to the conceptual diagrams of FIGS. 13 to 18. Note that in the following description, it is omitted that the control section 10 writes and reads each set of the data from the storage section 11.

As shown in FIG. 12, the control section 10 acquires the captured pattern data PS that was captured by the imaging section 14 (S200). Specifically, the control section 10 transports the medium M in the transport direction by the transport section 13, captures an image of the pattern P of the medium M using the imaging section 14, and acquires the captured medium data MS and the captured pattern data PS as shown in FIG. 13. The control section 10 generates, based on the acquired captured pattern data PS, conversion data based on the expansion data that was generated in the above pre-print process (S201). More specifically, the control section 10 performs affine transformation on the expansion data to generate the conversion data. Affine transformation is a transformation, such as rotation, movement, deformation, expansion, and contraction, of data that is target of processes. The following is a specific explanation of the affine transformation process of the control section 10.

When the medium M is transported by the transport section 13, the medium M and the pattern P may be stretched or bent by being pulled, and may be deformed such as by rotation, movement, deformation, expansion, or contraction. Then, the captured medium data MS and the captured pattern data PS, which were captured by the imaging section 14, also become values reflecting the deformation. Specifically, the captured pattern data PS, which was actually captured by the imaging section 14, may be deformed by rotation, movement, expansion, contraction, or the like, compared to the pattern data P, which is the CAD data used to weave the medium M shown in FIG. 5. The captured pattern data PS shown in FIG. 13 shows, as an example of deformation, a case where the pattern data P is stretched and expanded in the transport direction.

The control section 10 performs the binarization process on the acquired captured pattern data PS. The control section 10 extracts a second feature point that corresponds to the first feature point that was set in the pre-print process, from the captured pattern data PS that was subjected to the binarization process. At this time, the control section 10 may perform a smoothing process on the captured pattern data PS that was subjected to the binarization process. Based on the result of comparing the first feature point and the second feature point, the control section 10 can calculate a correction amount for the affine transformation, which includes transformations such as rotation, movement, deformation, expansion, or contraction.

As described above, in the example of the captured pattern data PS shown in FIG. 13, the pattern data P shown in FIG. 5 is stretched and expanded in the transport direction. The correction amount of the affine transformation here is a correction amount such that it stretches and expands in the transport direction. The control section 10 performs the affine transformation on the expansion data based on the calculated correction amount of the affine transformation to generate the conversion data (S201). In other words, the control section 10 performs the affine transformation on the expansion data so as to correspond to the deformed captured pattern data PS, and generates the conversion data. The control section 10 also corrects the generated conversion data (S202).

Based on the expansion data generated in the pre-print process, the control section 10 can perform the affine transformation on a region such that covers the deformed captured pattern data PS. Hereinafter, the affine transformation for the third expansion data D31 and the first expansion data D11 will be described in order. The correction of the generated conversion data will also be described.

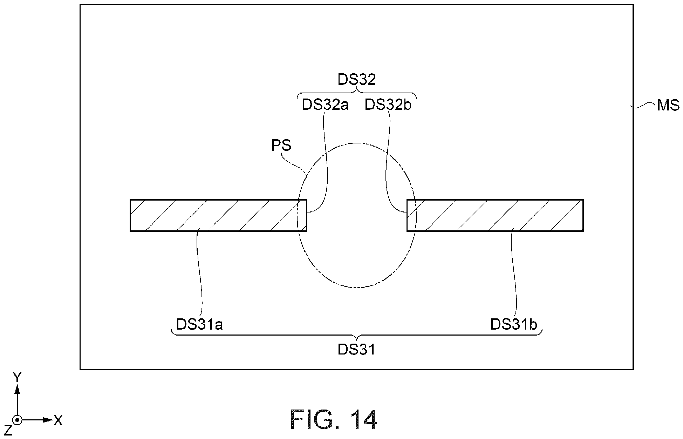

First, the control section 10 performs the affine transformation on the third expansion data D31, and generates third expansion conversion data DS31 shown in FIG. 14 (S201). The third expansion conversion data DS31 includes third A expansion conversion data DS31a that was obtained by affine transformation of the third A expansion data D31a, and the third B expansion conversion data DS31b that was obtained by affine transformation of the third B expansion data D31b.

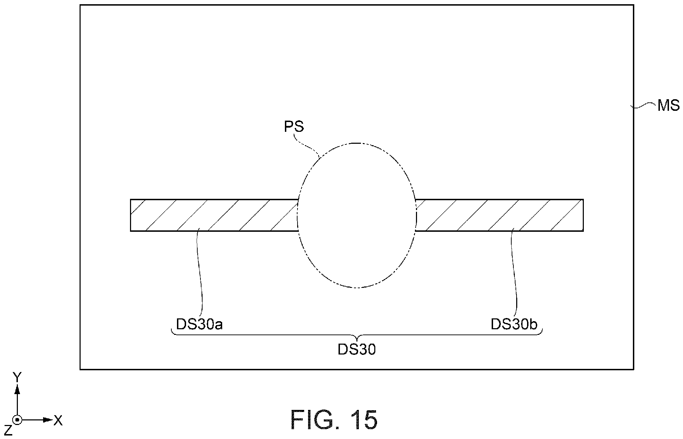

As shown in FIG. 14, the control section 10 virtually superimposes the captured pattern data PS on the third expansion conversion data DS31. The control section 10 corrects the third expansion conversion data DS31 so as to remove third elimination data DS32, which is an overlapping portion that overlaps with the captured pattern data PS (S202), and obtains the third conversion data DS30 shown in FIG. 15. As shown in FIG. 14, the third elimination data DS32 includes third A elimination data DS32a and third B elimination data DS32b. The control section 10 corrects the third A expansion conversion data DS31a so as to remove the third A elimination data DS32a from the third A expansion data DS31a, and then obtains third A conversion data DS30a as shown in FIG. 15. The control section 10 corrects the third B expansion conversion data DS31b so as to remove the third B elimination data DS32b from the third B expansion data DS31b, and then obtains third B conversion data DS30b as shown in FIG. 15.

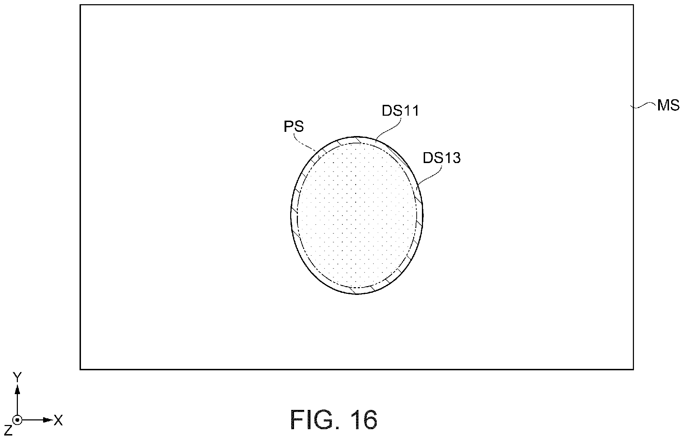

Next, as shown in FIG. 16, the control section 10 performs the affine transformation on the first expansion data D11 to generate first expansion conversion data DS11 (S201). In FIG. 16, the first expansion conversion data DS11 indicates the inside of the outermost circumference of the ellipse. The control section 10 virtually superimposes the captured pattern data PS on the first expansion conversion data DS11. The control section 10 corrects the first expansion conversion data DS11 so as to remove the first elimination data DS13, which is a portion protruding outward from the captured pattern data PS (S202).

The first elimination data DS13 is a ring-shaped portion between the outer periphery of the first expansion conversion data DS11 and the outer periphery of the captured pattern data PS. Note that in FIG. 16, for convenience of explanation of the first elimination data DS13, which protrudes outward from the captured pattern data PS, second conversion data DS20 (to be described later) is covered and hidden by the captured pattern data PS.

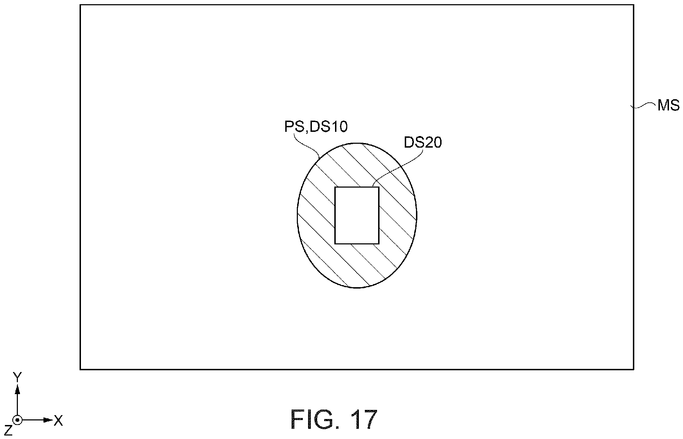

FIG. 17 shows the first conversion data DS10 obtained by removing the first elimination data DS13 from the first expansion conversion data DS11. The outer circumference and the size of the captured pattern data PS are the same as those of the first conversion data DS10. Note that the control section 10 places the second conversion data DS20 obtained by affine transformation of the second print data D20, which was replaced in the pre-print process, in the first conversion data DS10.

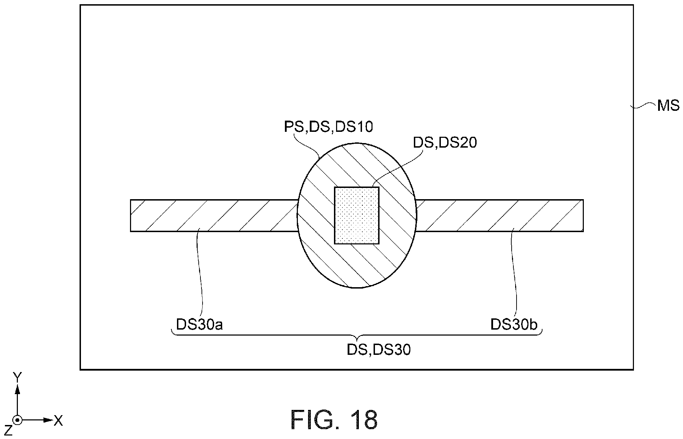

As shown in FIG. 18, the control section 10 combines (S203) the first conversion data DS10 and the second conversion data DS20, which are within the captured pattern data PS, and the third conversion data DS30, which is outside the captured pattern data PS, to obtain the conversion data DS. In other words, in the pre-print process, the control section 10 expands and corrects each of the print data D0, which was separated into the inside and the outside of the pattern data P, then in the print process, the control section 10 performs affine transformation to correct them and combines them to obtain the conversion data DS. Note that in FIG. 18, the control section 10 virtually superimposes the conversion data DS on the captured pattern data PS. Therefore, the captured pattern data PS appears on the second conversion data DS20, which is the blank data.

The control section 10 prints the conversion data DS on the medium M by the printing section 12 (S 204). Specifically, the control section 10 uses the transport section 13 to transport the medium M in the transport direction, and uses the printing section 12 to print the conversion data DS on the medium M. As described above, at this time, the control section 10 captures the pattern P of the medium M by using the imaging section 14. In the print process, the control section 10 can sequentially acquire the captured pattern data PS on the upstream side in the transport direction to generate the conversion data DS, and can print the conversion data DS.

The control section 10 may print the conversion data DS on the medium M using the printing section 12 while transporting the medium M in the transport direction using the transport section 13. The control section 10 may use the imaging section 14 to capture an image of the pattern P of the medium M while using the transport section 13 to transport the medium M in the transport direction. In this case, the control section 10 simultaneously executes, with respect to the medium M, transport using the transport section 13, printing using the printing section 12, and capturing using the imaging section 14. The control section 10 may print the conversion data DS on the medium M by repeating printing using the printing section 12 after transporting the medium M in the transport direction for a predetermined length using the transport section 13. The imaging section 14 can capture the pattern P of the medium M whose transportation is stopped while the printing section 12 is printing. The imaging section 14 can also capture the pattern P of the medium M being transported when the printing section 12 is not printing.

FIG. 18 can also be shown as corresponding to the result of the control section 10 that actually printed the conversion data DS on the medium M using the printing section 12. In this case, the captured medium data MS and the captured pattern data PS in FIG. 18 can be shown as corresponding to the deformed medium M and pattern P. The conversion data DS in FIG. 18, including the first conversion data DS10, the second conversion data DS20, and the third conversion data DS30, can be shown as corresponding to the print result. In this way, the control section 10 can generate and print the conversion data DS in accordance with the pattern P of the deformed medium M.

The printing device 1 according to the above embodiment is provided with the transport section 13 that transports the medium M having the pattern P, the imaging section 14 that captures the medium M being transported by the transport section 13, the printing section 12 that performs printing on the medium M, and the control section 10 that performs the print process after the pre-print process. As the pre-print process, the control section 10 acquires pattern data P relating to the pattern P of the medium M and generates expansion data using expanding print data D0 to be printed by the printing section 12. As the print process, the control section 10 acquires captured pattern data PS relating to the pattern P of the medium M captured using the imaging section 14, generates, based on the captured pattern data PS, the conversion data DS based on the expansion data, and uses the printing section 12 to print the conversion data DS on the medium M.

There is a case where the printing device 1 attempts to print the print data D0 in accordance with the pattern P of the medium M or at a position corresponding to a position of the pattern P. If the control section 10 prints the print data D0 on the deformed medium M as it is, the print position of the print data D0 may be shifted from an intended position with respect to the deformation pattern P. However, according to the printing device 1 of the above embodiment, it is possible to generate and print the conversion data DS in accordance with the pattern P of the deformed medium M. Therefore, it is possible to suppress printing from being shifted from the intended position with respect to the deformed pattern P.

Although the above has been described in detail with reference to the drawings, the specific configurations are not limited to the embodiments, and it may be modified, replaced, deleted, and the like, as long as it does not deviate from the gist of this disclosure. For example, the pattern P of the medium M may be printed in advance on the opposite surface of the printing surface of the medium M. In the pre-print process, the control section 10 may first process the first print data D10 within the separated pattern data, and then process the third print data D30 outside the separated pattern data P. In the pre-print process, the control section 10 may first process the first expansion data D11 within the separated pattern data, and then process the third expansion data D31 outside the separated pattern data P. In the generation of the conversion data DS based on the expansion data, a method other than affine transformation may be used. For example, a non-linear transformation such as a projective transformation, a B-spline method, or a Thin-plate spline method may be used.

## Claims

1. A printing device comprising:
a transport section that transports a medium having a pattern;
an imaging section that captures an image of the medium;
a printing section that performs printing on the medium; and
a control section that performs a print process after performing a pre-print process, wherein
the control section,
as the pre-print process,
acquires pattern data that relates to the pattern of the medium and expands print data that is to be printed by the printing section to generate expansion data and,
as the print process,
acquires captured pattern data that relates to the pattern of the medium captured by the imaging section,
generates, based on the captured pattern data, conversion data based on the expansion data, and
prints the conversion data on the medium using the printing section.

2. The printing device according to claim 1, wherein
the control section, as the pre-print process,
separates the print data into first print data, which is located within the pattern data and overlaps with the pattern data, and third print data, which is located outside the pattern data and does not overlap with the pattern data and
generates first expansion data and third expansion data, respectively.

3. The printing device according to claim 2, wherein
the control section, as the pre-print process,
if the print data has second print data, which is located within the first print data, separates the second print data together with the first print data and
when generating the first expansion data, corrects the first expansion data so that the second print data is located within the first expansion data.

4. The printing device according to claim 2, wherein
the control section, as the print process,
generates first conversion data based on the first expansion data,
generates third conversion data based on the third expansion data, and
combines the first conversion data and the third conversion data to obtain the conversion data that is printed by the printing section.

5. The printing device according to claim 4, wherein
the control section, as the print process, performs a correction to remove, from the first conversion data, a portion that overlaps with the captured pattern data and a correction to remove, from the third conversion data, a portion that protrudes from the captured pattern data, and then combines the first conversion data and the third conversion data.

6. The printing device according to claim 1, wherein
the control section,
as the pre-print process, performs a binarization process on the acquired pattern data to set a first feature point that relates to an edge of the pattern data and
as the print process, performs the binarization process on the acquired captured pattern data to extract a second feature point that corresponds to the first feature point, and generates the conversion data based on a result of comparing the first feature point and the second feature point.

7. A method for controlling a printing device that includes a transport section that transports a medium having a pattern, an imaging section that captures an image of the medium, and a printing section that performs printing on the medium, and performs a print process after performing a pre-print process,
the method for controlling the printing device comprising:
as the pre-print process,
acquiring pattern data that relates to the pattern of the medium and expanding print data that is to be printed by the printing section to generate expansion data, and,
as the print process,
acquiring captured pattern data that relates to the pattern of the medium captured by the imaging section,
generating, based on the captured pattern data, conversion data based on the expansion data, and
printing the conversion data on the medium using the printing section.
